# EUROPEAN PATENT SPECIFICATION

(11) **EP 4 003 932 B1**
(45) Date of publication and mention of the grant of the patent: **11.10.2023**
(21) Application number: 20772096.2
(22) Date of filing: 30.07.2020
(51) Int. Cl.: C04B 26/26, C08L 95/00, C04B 18/02, E01C 7/26

(54) **COMPOUND FOR MAKING A CONGLOMERATE FOR MAKING ROAD PAVEMENTS AND METHOD FOR PRODUCING THE CONGLOMERATE**
VERBINDUNG ZUR HERSTELLUNG EINES KONGLOMERATS ZUR HERSTELLUNG VON STRASSENBELÄGEN UND DAS KONGLOMERATSHERSTELLUNGSVERFAHREN
COMPOSÉ POUR LA FABRICATION DE CONGLOMERAT POUR LA PRODUCTION DE REVÊTEMENTS DE CHAUSSÉES, ET PROCÉDÉ DE PRODUCTION DU CONGLOMERAT

(30) Priority: 31.07.2019 CH 9732019
(43) Date of publication of application: 01.06.2022
(73) Proprietor: Mondini, Alessandro, 6612 Ascona (CH)
(72) Inventor: Mondini, Alessandro, 6612 Ascona (CH)
(74) Representative: M. Zardi & Co S.A.
(86) International application number: PCT/IB2020/057185
(87) International publication number: WO 2021/019482

(56) References cited:
- EP-A1- 2 151 474
- EP-A1- 3 249 017
- WO-A1-2011/096004
- WO-A1-2015/126252
- WO-A2-2011/112569
- CN-A- 107 304 112
- CN-A- 108 264 268

## Description

### Field of application

The present invention relates to a compound or pellet for making a conglomerate for making a road pavement, in particular a conglomerate comprising a binder, heavy inert material, an elastomeric material in the form of a fine powder and/or granulate, and a thermoplastic polymer.

### Prior art

A conglomerate for road pavements is essentially a mixture of a binder and a heavy inert material, optionally including a filler. Generally, the binder consists of bitumen and the heavy inert material comprises sand and gravel and, when present, the filler.

A problem encountered in connection with the production of conglomerates for road pavements is represented by the reduction of noise. It is known that the rolling of tires emits a noise level higher than the engine even when running at a moderate speed, for example about 35 kilometres per hour. This problem is therefore strongly felt in the proximity of urban centres and in areas affected by intense or heavy traffic and moreover it has worsened considerably in recent years due to the increase in vehicle traffic and wheeled transport (increasingly heavier articulated lorries, etc.).

In an attempt to solve this problem, conglomerates were developed with the addition of a component consisting of a light inert material, such as volcano ash, pumice or expanded clay. It is common knowledge that the addition of a light inert material facilitates the laying of the conglomerate since it reduces the weight, provides greater plasticity and favours the application at relatively low temperatures. However, it has been found that to achieve a certain sound-absorbing effect, a relative high quantity of said light aggregate (for example expanded clay) is required, which increases the cost of the conglomerate.

The European patent EP 2 151 474 and Swiss patent CH 699 210, in the name of the present applicant, describe a conglomerate for making road pavements which contains 6% to 50% by weight of a light inert material and 0.5% to 5% of rubber powder and/or rubber granulate.

Another technique for reducing the rolling noise caused by vehicle traffic consists in making the pavement with a relatively high content of residual voids during laid typically between 12% and 16% so as to obtain a porosity on-site similar to that of the known drainage asphalts. However such pavement has the drawback of a significantly shorter lifespan than a traditional conglomerate, and the sound-absorbing effect is reduced over time due to the clogging of the pores. This phenomenon may also lead to a slippery road surface, especially in wet conditions, with deleterious effects on driving safety. This is therefore an unsatisfactory solution.

A further problem which arises in the construction of a road pavement is associated with the incentive to use recycled materials in view of cost and environmental impact aspects. For example, it is known to use fine rubber powder obtained from exhausted tyres (the disposal of which is notoriously an environmental problem). However the quantity of such fine powder added in the common conglomerates is modest and consequently the possibility of recycling is limited.

Conglomerates with a polymer mixed therein are known. Said polymer is added to increase the mechanical strength since the added polymer is known to improve the adhesion between the grains of the heavy inert material and the bitumen. In such type of conglomerates, the use of recycled polymers is known but in decidedly limited quantity.

In some embodiments of the prior art, it has been proposed to modify the bitumen (binder) with the addition of various components. This technique has the drawback of making the production of the conglomerate more complex since a special bitumen is required and for this reason is not very practical for on-site use. Furthermore, the added components in some cases give rise to environmental and/or health-related issues.

More in details, the technique of modifying the composition of the bitumen has the drawback that it cannot be easily applied and requires special infrastructures. The addition of rubber powder as a modifying agent for the bitumen also results in a significant increase in the viscosity of the bitumen itself. This marked increase in the viscosity of the binder affects the laying of the conglomerate on-site resulting in a more difficult application. Furthermore, according to the technical literature, the bitumen (binder) so modified may not be stored for more than 72 hours. Otherwise, the risk of separation increases considerably with negative consequences for the quality of the product. Furthermore, the added components, and in some cases also the (high temperature) processing conditions, may give rise to environmental and/or health-related issues.

A compound for making a conglomerate is disclosed by WO 2011/096004.

### Summary of the invention

The technical problem underlying the present invention is to devise a conglomerate capable of reducing the noise arose by the rolling of tyres generally caused by the passage of motor vehicles, by trying to adopt solutions that are technically effective but also advantageous from an economic and environmental point of view, and which ensure a long duration over time, an optimum mechanical strength and good grip of the tyres. Another object of the invention is to simplify the production of a conglomerate with the aforementioned characteristics.

The problem is solved with a compound or pellet according to claim 1. The compound or pellet can be used for making a conglomerate. The conglomerate comprises an elastomeric material in an amount comprised between 2.0% and 40% by weight and a thermoplastic polymer in an amount comprised between 0.1% to 12.0% by weight.

A number of features and preferred formulations are described in the dependent claims.

The invention also relates to a method for the production of a conglomerate for road pavements according to claim 7.

The invention relates to a compound or pellet according to the attached claims which contains the elastomeric material and the polymer in suitable proportions and is ready to use for the production of a conglomerate.

The idea behind the present invention is to reduce the noise emissions of a conglomerate by means of a suitable mixture of an elastomeric material and a thermoplastic polymer.

The elastomeric material in the compound or pellet is in the form of a fine powder or granulate. In the field, said fine powder or granulate of elastomeric material is usually referred to, for short, as rubber powder or granulate.

The particularly preferred amounts of the elastomeric material in the conglomerate are the following: 2.0% to 12.0; 2.0% to 10.0%; 2.0% to 8.0%.

The elastomeric material may be present in the conglomerate in an amount greater than or equal to 5.0% of the total weight of the conglomerate, more preferably in an amount greater than or equal to 8.0% of the total weight. Consequently, the elastomeric material may be present in an amount ranging from 5.0% or 8.0% up to 10.0% or 12.0% in various combinations. In some applications, a maximum of 30% or 20% instead of 40% may be envisaged. The thermoplastic polymer preferably comprises one or more of the following: PE, PET, PP, PS, PVC, EVA. More preferably, it consists of PET or PE or EVA. The elastomeric material and/or the polymer in some embodiments are at least partially obtained from recycling. For example, a recycled rubber powder or granulate is advantageously obtained from end-of-life tyres (ELTs). A recycled thermoplastic polymer may be obtained for example from recycled PET bottles or Tetra Pak type containers. Preferably, the elastomeric material is in the form of a fine powder or granulate obtained primarily or exclusively from end-of-life tyres.

The percentage amount of the various components may vary within the claimed ranges, depending on the intended use of the conglomerate and in particular depending on the layer of the pavement for which the conglomerate is produced. For example, different formulations may be used depending on whether the conglomerate is intended to form a foundation layer, a base layer, an intermediate connecting layer or a surface layer. The surface layer is also known as the "wear layer". The conglomerate obtainable with the compound of the invention has a first important advantage due to the fact that it can be easily produced at a low cost and shows a marked reduction in noise.

Owing to the combination of rubber powder or granulate and thermoplastic material, the conglomerate may be made using unusually large amount of rubber powder or granulate and thermoplastic material. Since these materials may be obtained from recycling (for example from end-of-life tyres in the case of the rubber powder and from recycled bottles in the case of the PET), the invention allows increasing the use of recycled products with significant advantages in terms of cost and environmental impact reduction. This advantage is further increased in the embodiments which also use recycled asphalt.

The recycled thermoplastic polymer may contain traces of other recycled or waste products such as metals and paper. The applicant has found that these further traces of waste material, in the amounts normally present in recycled polymers, obtained for example from PET bottles, do not affect the performance of the conglomerate, in particular the reduction of noise.

The use of a compound or pellet containing the desired amount of rubber or polymer has the further major advantage of simplifying the production process and ensuring that is error-free thus obtaining consistent quality. In particular, the invention does not involve modification of the binder. A further advantage is that the compound according to the invention may be made exclusively using components which are not hazardous to health.

Further features and advantages will become clear from the description hereinbelow provided purely for illustrative and non-limiting purposes of the scope of protection of this application.

### Preferred embodiments

According to a preferred formulation of conglomerate, in particular for making the wear layer of the road pavement, the weight of the elastomeric material is comprised between 2.0% and 12.0% of the total weight of the conglomerate, more preferably between 2.0% and 10.0% and even more preferably between 2.0% and 8.0%. The percentage amounts are always expressed in terms of weight unless otherwise specified.

The weight of the thermoplastic polymer is preferably comprised between 0.3% and 3.0% of the total weight of the conglomerate. Preferably, the polymer is PE, PET or EVA.

According to a preferred formulation of conglomerate intended to form a connecting layer, a base or a foundation layer of the road pavement, the elastomeric material has a weight comprised between 2.0% and 9.0% of the total weight of the conglomerate, and the polymer has a weight comprised between 0.1% and 2.0% of the total weight of the conglomerate.

The conglomerate may comprise recycled asphalt which reduces the cost of the conglomerate. According to the common use the term "asphalt" refers to a bituminous conglomerate used for road pavement.

When recycled asphalt is used, the proportion of recycled asphalt compared to the total weight of the conglomerate may vary depending on the intended use of said conglomerate and more preferably is:
5% to 60% to make a surface layer or wear layer of the road pavement;
10% to 70% to make a connecting layer between two sections of the road pavement;
10% to 80% in the base layers;
10% to 90% in the foundation layers.

In a specific embodiment, the conglomerate comprises a fourth component consisting of a light inert material, preferably with a density less than 2.0 Mg/m³ and a bulk density less than 1.2 Mg/m³, and having a weight of 2% to 30% of the total weight of the conglomerate. In particular, said light inert material is used to increase the plasticity of the conglomerate and to improve laying even under a cold state. However, the conglomerate may also be formulated in a version where the light inert material is absent.

The conglomerate is made by means of a mixing method in which the components are inserted in the mixer device in the following sequence: first the heavy inert material; second the thermoplastic polymer and the elastomeric powder or granulate, and third the binder. The production of the conglomerate according to this method may be carried out in conventional plants suitable for the production of bituminous mixtures, which is an advantage because no special equipment is required. All the components are fed into the mixer following the sequence indicated above.

The elastomeric material and the thermoplastic polymer are added during the manufacture of the conglomerate in the form of a compound consisting of granules or pellet.

Preferably, the weight of the compound or pellet is comprised between, for example, 3% and 15% of the total weight of the conglomerate.

It should be noted that the proportions have been indicated as percentage; in the field for an immediate understanding, reference is often made to kg per tonne of conglomerate, where 1% corresponds to 10 kg per tonne. Therefore, for example a range from 2% to 12% corresponds to a weight from 20 kg to 120 kg per tonne.

Preferably, the binder content is not more than 12% by weight.

According to the invention, a ready-to-use compound or pellet is provided for making a conglomerate for road pavements, which contains the elastomeric material and the polymer in the desired proportions for a specific conglomerate formulation according to the claims (for example for one of the uses already mentioned above)

Preferably, the elastomeric material in the compound has a weight quantity double or greater than the polymer.

Preferably, the compound comprises only the elastomeric material and the polymer without additives. The additives may be added to improve the workability, its dispersibility or to improve the final quality of the conglomerate. The compound may comprise at least 95% by weight which is the sum of the elastomeric material and the polymer, while the remaining 5% (or less) being represented by the aforementioned additives.

The compound comprises at least 80% by weight of elastomeric material, the remaining amount which makes up 100% consisting of the polymer and any additives. In a preferred embodiment, the compound comprises from 80% to 85% by weight of elastomeric material and correspondingly from 20% to 15% by weight of polymer and any additives. In a particularly preferred embodiment, the compound comprises 83% of elastomeric material and 17% of polymer and any additives.

The polymer in the compound may comprise any one of the following: PET, PP, PS, PVC, EVA. The elastomeric material in the compound is advantageously obtained at least partially from end-of-life tyres.

The elastomeric material in the compound is preferably in the form of a fine powder having granules not exceeding 2 mm in size.

### Example

By way of example, the composition of a wear layers conglomerate is provided below; the Applicant has found excellent results in terms of noise reduction of the road pavement made with this composition and also in term of physical-mechanical characteristics, such as resistance to permanent deformation, resistance to fatigue and limited material loss.

Composition of the conglomerate for wear layers:

| | |
|---|---|
| Filler | 4% |
| Sand 0-2 mm | 4% |
| Sand 2-4 mm | 29% |
| Stone chippings 4-8 mm | 47% |
| Rubber powder | 7% |
| Recycled polyethylene in granular form | 1% |
| Bitumen | 8% |

## Claims

1. A ready-to-use compound or pellet for making a conglomerate for road pavements wherein said compound or pellet contains an elastomeric material and a thermoplastic polymer material in suitable proportions for making the conglomerate, wherein the sum of the elastomeric material and the thermoplastic polymer constitutes at least 95% by weight of the composition, the compound containing at least 80% by weight of elastomeric material, the remainder up to 100% consisting of said polymer and any additives, the compound containing correspondingly up to 20% by weight of said polymer and any additives.

2. A compound according to claim 1 containing 80% to 85% by weight of elastomeric material and 20% to 15% by weight of said polymer and any additives, preferably 83% of elastomeric material and 17% of said polymer and any additives.

3. Compound according to claim 1 or 2, wherein said polymer is any one of the following: PE, PET, PP, PS, PVC, EVA.

4. Compound according to claim 3, wherein said polymer is EVA.

5. Compound according to any of the claims 1 to 4, wherein the elastomeric material is at least partially obtained from end-of-life tyres (ELTs).

6. Compound according to any of the claims 1 to 5, wherein the elastomeric material is in the form of a fine powder having granules not exceeding 2 mm in size.

7. Method for making a conglomerate for road pavements wherein:
the conglomerate comprises a binder, preferably bitumen; a first component consisting of a heavy inert material having a density greater than 2.0 Mg/m³; at least one elastomeric material in the form of a fine powder and/or granulate; at least one thermoplastic polymer in the form of granules or fibres;
said elastomeric material having a weight comprised between 2.0% and 40% of the total weight of the conglomerate, and said thermoplastic polymer having a weight comprised between 0.1% and 12.0% of the total weight of the conglomerate;
the method comprises the use of a mixer device, wherein the components of the conglomerate are feed into the mixer device according to the following sequence: first the heavy inert material; second the thermoplastic polymer and the elastomeric powder or granulate, and third the binder;
wherein the elastomeric material and the thermoplastic polymer are added into the mixer in the form of a compound consisting of granules, preferably in the form of pellet, which comprises said elastomeric material and said thermoplastic polymer in a desired proportion, the compound being in accordance with any of claims 1 to 6.

8. Method according to claim 7 wherein said compound has a weight comprised between 3% and 15% of the total weight of the conglomerate.

9. Method according to claim 7 or 8 wherein, in the conglomerate, the elastomeric material has a weight comprised between 2.0% and 12.0%, preferably between 2.0% and 10% and more preferably between 2.0% and 8.0% of the total weight of the conglomerate.

10. Method according to any of claims 7 to 9 wherein, in the conglomerate, the thermoplastic polymer has a weight comprised between 0.3% and 3.0% of the total weight of the conglomerate.

11. Method according to any of claims 7 to 10 for the making of a conglomerate for the realisation of a connecting layer, wherein, in the conglomerate:
the elastomeric material has a weight comprised between 2.0% and 9.0% of the total weight of the conglomerate;
the polymer, which preferably is PE, has a weight comprised between 0.1% and 2.0% of the total weight of the conglomerate.

12. Method according to any of claims 7 to 11 wherein the conglomerate comprises recycled asphalt.

13. Method according to claim 12 wherein:
the weight of the recycled asphalt in the conglomerate is between 5% and 60% of the total weight of the conglomerate and the conglomerate is intended for the realisation of a wear layer of the road pavement, or
the weight of the recycled asphalt in the conglomerate is between 10% and 70% of the total weight of the conglomerate which is intended for the realisation of a connecting layer (binder) of the road pavement, or
the weight of the recycled asphalt in the conglomerate is between 10% and 80% or between 10% and 90% of the total weight of the conglomerate which is intended respectively for the realisation of a bottom layer or the realisation of a base above the bottom layer of the road pavement.

14. Method according to any of the previous claims 7 to 13 wherein the thermoplastic polymer is at least partially obtained from recycling, preferably of PET bottles.

15. Method according to one of the previous claims 7 to 14 the conglomerate comprising a light inert material with a density lower than 2.0 Mg/m³ and a bulk density lower than 1.2 Mg/m³, said light inert material having a weight comprised between 2% and 30% of the total weight of the conglomerate.

## Patentansprüche

1. Gebrauchsfertiges Gemisch oder Pellet zur Herstellung eines Konglomerats für Straßenbeläge, wobei das Gemisch oder Pellet ein Elastomermaterial und ein thermoplastisches Polymermaterial in geeigneten Anteilen zur Herstellung des Konglomerats enthält, wobei die Summe des Elastomermaterials und des thermoplastischen Polymers mindestens 95 Gew.-% der Zusammensetzung bildet, wobei das Gemisch mindestens 80 Gew.-% an Elastomermaterial enthält, der Restbetrag bis auf 100% aus dem Polymer und beliebigen Zusatzstoffen besteht und das Gemisch entsprechend bis zu 20 Gew.-% des Polymers und beliebiger Zusatzstoffe enthält.

2. Gemisch nach Anspruch 1, das 80 bis 85 Gew.-% an Elastomermaterial und 20 bis 15 Gew.-% des Polymers und beliebiger Zusatzstoffe enthält, vorzugsweise 83% an Elastomermaterial und 17% des Polymers und beliebiger Zusatzstoffe.

3. Gemisch nach Anspruch 1 oder 2, wobei das Polymer eines der folgenden ist: PE, PET, PP, PS, PVC, EVA.

4. Gemisch nach Anspruch 3, wobei es sich bei dem Polymer um EVA handelt.

5. Gemisch nach einem der Ansprüche 1 bis 4, wobei das Elastomermaterial zumindest teilweise aus Reifen (ELTs) erhalten wird, die am Ende ihrer Lebensdauer angelangt sind.

6. Gemisch nach einem der Ansprüche 1 bis 5, wobei das Elastomermaterial in Form eines feinen Pulvers mit Körnchen vorliegt, deren Größe 2 mm nicht überschreitet.

7. Verfahren zur Herstellung eines Konglomerats für Straßenbeläge, wobei:
das Konglomerat einen Binder, vorzugsweise Bitumen; eine erste Komponente aus einem schweren inerten Material mit einer Dichte größer als 2,0 Mg/m³; mindestens ein Elastomermaterial in Form eines feinen Pulvers und/oder Granulats; mindestens ein thermoplastisches Polymer in Form von Körnchen oder Fasern aufweist; wobei das Elastomermaterial ein Gewicht hat, das zwischen 2,0% und 40% des Gesamtgewichts des Konglomerats beträgt, und das thermoplastische Polymer ein Gewicht hat, das zwischen 0,1 % und 12,0% des Gesamtgewichts des Konglomerats beträgt;
wobei das Verfahren den Einsatz einer Mischvorrichtung umfasst, wobei die Komponenten des Konglomerats der Mischvorrichtung gemäß der folgenden Abfolge zugeführt werden: zuerst das schwere inerte Material; zweitens das thermoplastische Polymer und das Elastomerpulver oder -Granulat, und drittens den Binder;
wobei das Elastomermaterial und das thermoplastische Polymer in den Mischer in Form eines Gemischs zugegeben werden, das aus Körnchen besteht, vorzugsweise in Form von Pellets, die das Elastomermaterial und das thermoplastische Polymer in einem gewünschten Anteil aufweisen, wobei das Gemisch gemäß einem der Ansprüche 1 bis 6 vorliegt.

8. Verfahren nach Anspruch 7, wobei das Gemisch ein Gewicht hat, das zwischen 3% und 15% des Gesamtgewichts des Konglomerats beträgt.

9. Verfahren nach Anspruch 7 oder 8, wobei in dem Konglomerat das Elastomermaterial ein Gewicht hat, das zwischen 2,0% und 12,0%, vorzugsweise zwischen 2,0% und 10% und noch bevorzugter zwischen 2,0% und 8,0% des Gesamtgewichts des Konglomerats beträgt.

10. Verfahren nach einem der Ansprüche 7 bis 9, wobei in dem Konglomerat das thermoplastische Polymer ein Gewicht hat, das zwischen 0,3% und 3,0% des Gesamtgewichts des Konglomerats beträgt.

11. Verfahren nach einem der Ansprüche 7 bis 10 zur Herstellung eines Konglomerats für die Realisierung einer Verbindungsschicht, wobei in dem Konglomerat:
das Elastomermaterial ein Gewicht hat, das zwischen 2,0% und 9,0% des Gesamtgewichts des Konglomerats beträgt;
das Polymer, bei dem es sich vorzugsweise um PE handelt, ein Gewicht hat, das zwischen 0,1 % und 2,0% des Gesamtgewichts des Konglomerats beträgt.

12. Verfahren nach einem der Ansprüche 7 bis 11, wobei das Konglomerat recycelten Asphalt aufweist.

13. Verfahren nach Anspruch 12, wobei:
das Gewicht des recycelten Asphalts in dem Konglomerat zwischen 5% und 60% des Gesamtgewichts des Konglomerats beträgt und das Konglomerat für die Realisierung einer Nutzschicht des Straßenbelags bestimmt ist, oder
das Gewicht des recycelten Asphalts in dem Konglomerat zwischen 10% und 70% des Gesamtgewichts des Konglomerats beträgt, das für die Realisierung einer Verbindungsschicht (Binder) des Straßenbelags bestimmt ist, oder
das Gewicht des recycelten Asphalts in dem Konglomerat zwischen 10% und 80% oder zwischen 10% und 90% des Gesamtgewichts des Konglomerats beträgt, das jeweils für die Realisierung einer Bodenschicht oder die Realisierung einer Basis über der Bodenschicht des Straßenbelags bestimmt ist.

14. Verfahren nach einem der vorhergehenden Ansprüche 7 bis 13, wobei das thermoplastische Polymer zumindest teilweise aus Recycling erhalten wird, vorzugsweise aus PET-Flaschen.

15. Verfahren nach einem der vorhergehenden Ansprüche 7 bis 14, wobei das Konglomerat ein leichtes inertes Material mit einer Dichte unter 2,0 Mg/m³ und einer Schüttdichte unter 1,2 Mg/m³ aufweist, wobei das leichte inerte Material ein Gewicht hat, das zwischen 2% und 30% des Gesamtgewichts des Konglomerats beträgt.

## Revendications

1. Composé ou granulé prêt à l'emploi pour la fabrication d'un conglomérat pour des revêtements de chaussées dans lequel ledit composé ou granulé contient un matériau élastomère et un matériau polymère thermoplastique dans des proportions appropriées pour fabriquer le conglomérat, dans lequel la somme du matériau élastomère et du matériau thermoplastique constitue au moins 95 % en poids de la composition, le composé contenant au moins 80 % en poids de matériau élastomère, le reste jusqu'à 100 % étant constitué dudit polymère et d'additifs quelconques, le composé contenant de manière correspondante jusqu'à 20 % en poids dudit polymère et d' additifs quelconques.

2. Composé selon la revendication 1 contenant 80 % à 85 % en poids de matériau élastomère et 20 % à 15 % en poids dudit polymère et des additifs quelconques, de préférence 83 % de matériau élastomère et 17 % dudit polymère et d'additifs quelconques.

3. Composé selon la revendication 1 ou 2, dans lequel ledit polymère est l'un quelconque des composés suivants : PE, PET, PP, PS, PVC, EVA.

4. Composé selon la revendication 3, dans lequel ledit polymère est EVA.

5. Composé selon l'une quelconque des revendications 1 à 4, dans lequel le matériau élastomère est au moins partiellement obtenu auprès de pneumatiques en fin de vie (ELT) .

6. Composé selon l'une quelconque des revendications 1 à 5, dans lequel le matériau élastomère se présente sous la forme d'une poudre fine ayant des granules d'une taille ne dépassant pas 2 mm.

7. Procédé de fabrication d'un conglomérat pour des revêtements de chaussées dans lequel :
le conglomérat comprend un liant, de préférence du bitume ; un premier composant constitué d'un matériau inerte lourd ayant une densité supérieure à 2,0 mg/m³ ; au moins un matériau élastomère sous la forme d'une poudre fine et/ou d'un granulat ; au moins un polymère thermoplastique sous forme de granules ou de fibres ;
ledit matériau élastomère ayant un poids compris entre 2,0 % et 40 % du poids total du conglomérat, et ledit polymère thermoplastique ayant un poids compris entre 0,1 % et 12,0 % du poids total du conglomérat ;
le procédé comprend l'utilisation d'un dispositif mélangeur, dans lequel les composants du conglomérat sont introduits dans le dispositif mélangeur selon la séquence suivante : premièrement le matériau inerte lourd ; deuxièmement le polymère thermoplastique et la poudre ou le granulat élastomère, et troisièmement le liant ;
dans lequel le matériau élastomère et le polymère thermoplastique sont ajoutés dans le mélangeur sous la forme d'un composé constitué de granules, de préférence sous la forme de granulé, qui comprend ledit matériau élastomère et ledit polymère thermoplastique dans une proportion souhaitée, le composé étant conforme à l'une quelconque des revendications 1 à 6.

8. Procédé selon la revendication 7 dans lequel ledit composé a un poids compris entre 3 % et 15 % du poids total du conglomérat.

9. Procédé selon la revendication 7 ou 8 dans lequel, dans le conglomérat, le matériau élastomère a un poids compris entre 2,0 % et 12,0 %, de préférence entre 2,0 % et 10 % et plus préférentiellement entre 2,0 % et 8,0 % du poids total du conglomérat.

10. Procédé selon l'une quelconque des revendications 7 à 9 dans lequel, dans le conglomérat, le polymère thermoplastique a un poids compris entre 0,3 % et 3,0 % du poids total du conglomérat.

11. Procédé selon l'une quelconque des revendications 7 à 10 pour la fabrication d'un conglomérat pour la réalisation d'une couche de liaison, dans lequel, dans le conglomérat :
le matériau élastomère a un poids compris entre 2,0 % et 9,0 % du poids total du conglomérat ;
le polymère, qui est de préférence PE, a un poids compris entre 0,1 % et 2,0 % du poids total du conglomérat.

12. Procédé selon l'une quelconque des revendications 7 à 11 dans lequel le conglomérat comprend de l'asphalte recyclé.

13. Procédé selon la revendication 12 dans lequel :
le poids de l'asphalte recyclé dans le conglomérat est compris entre 5 % et 60 % du poids total du conglomérat et le conglomérat est destiné à la réalisation d'une couche d'usure du revêtement de chaussée, ou
le poids de l'asphalte recyclé dans le conglomérat est compris entre 10 % et 70 % du poids total du conglomérat qui est destiné à la réalisation d'une couche de liaison (liant) du revêtement de chaussée, ou
le poids de l'asphalte recyclé dans le conglomérat est compris entre 10 % et 80 % ou entre 10 % et 90 % du poids total du conglomérat qui est destiné respectivement à la réalisation d'une couche inférieure ou à la réalisation d'une base au-dessus de la couche inférieure du revêtement de chaussée.

14. Procédé selon l'une quelconque des revendications précédentes 7 à 13 dans lequel le polymère thermoplastique est au moins partiellement obtenu d'un recyclage, de préférence de bouteilles en PET.

15. Procédé selon l'une des revendications précédentes 7 à 14, le conglomérat comprenant un matériau inerte léger avec une densité inférieure à 2,0 mg/m³ et une densité volumique inférieure à 1,2 mg/m³, ledit matériau inerte léger ayant un poids compris entre 2 % et 30 % du poids total du conglomérat.
